(19)

Europäisches Patentamt
European Patent Office
Office européen des brevets

(11) **EP 1 843 171 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(51) Int Cl.:
*G01S 7/486* $^{(2006.01)}$      *G01S 17/10* $^{(2006.01)}$

(21) Anmeldenummer: **07002120.9**

(22) Anmeldetag: **31.01.2007**

(54) **Distanzmessvorrichtung**

Distance measuring device

Dispositif de mesure de distances

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.04.2006 DE 102006016026**

(43) Veröffentlichungstag der Anmeldung:
**10.10.2007 Patentblatt 2007/41**

(73) Patentinhaber: **SICK AG**
**79183 Waldkirch (DE)**

(72) Erfinder: **Torabi, Bahram**
**79100 Freiburg (DE)**

(74) Vertreter: **Manitz, Gerhart**
**Manitz, Finsterwald & Partner GbR**
**Postfach 31 02 20**
**80102 München (DE)**

(56) Entgegenhaltungen:
**EP-A2- 1 132 726        WO-A-99/34235**
**DE-A1- 10 253 437**

EP 1 843 171 B1

**Beschreibung**

Die Erfindung betrifft eine Distanzmessvorrichtung zum Ermitteln einer Distanz nach dem Lichtlaufzeitprinzip, mit einem Lichtsender zum Aussenden wenigstens eines Sendelichtpulses entlang einer Messstrecke, wenigstens einem Lichtempfänger zum Empfangen des Sendelichtpulses und zum Erzeugen eines entsprechenden Empfangssignals, einem Integrator eines ersten Empfangskanals, der zur Integration während der Dauer des gesamten Empfangssignals ausgebildet ist, und einem Integrator eines zweiten Empfangskanals, der derart ansteuerbar ist, dass die Integration lediglich während eines solchen Teils der Dauer des Empfangssignals erfolgt, der von der Länge der Messstrecke abhängt.

Mittels einer derartigen Distanzmessvorrichtung kann der Abstand zu einem Objekt (so genanntes Target) bestimmt werden. Hierfür wird ein Sendelichtpuls ausgesendet, der an dem Target reflektiert und nach der Reflexion wieder empfangen und in ein elektrisches Empfangssignal umgewandelt wird. In einem ersten Empfangskanal der Distanzmessvorrichtung wird im Wesentlichen das gesamte Empfangssignal zu einem ersten Integrationswert aufintegriert. Die eigentliche Messinformation über die benötigte Lichtlaufzeit und somit über die Länge der Messstrecke (bis zu dem Target und zurück) wird in einem zweiten Empfangskanal ermittelt. Hierfür wird lediglich ein Teil des Empfangssignals zu einem zweiten Integrationswert aufintegriert, wobei dieser aufintegrierte Teil von dem Zeitpunkt abhängt, zu dem der ausgesendete und reflektierte Sendelichtpuls die Distanzmessvorrichtung wieder erreicht. Über die Lichtgeschwindigkeit hängt dieser zweite Integrationswert somit von der Länge der Messstrecke ab. Um hieraus die gesuchte Distanz zu dem Target zu berechnen, werden der erste Integrationswert und der zweite Integrationswert miteinander verrechnet.

Nachteilig an bekannten Distanzmessvorrichtungen ist, dass für große Distanzen der empfangene Sendelichtpuls nur eine geringe Intensität besitzt und dementsprechend lediglich ein geringes Empfangssignal erzeugt wird, das sich für eine Auswertung hinsichtlich der zurückgelegten Messstrecke kaum noch eignet. Der Messbereich dieser bekannten Distanzmessvorrichtungen ist deshalb unerwünscht begrenzt.

WO 99/34235 beschreibt eine Vorrichtung zur Aufnahme eines dreidimensionalen Abstandsbildes, bei der von einer dreidimensionalen Szene zurückgestreute Lichtpulse mit unterschiedlichen Integrationszeiten aufgenommen beziehungsweise erfasst werden.

Es ist eine Aufgabe der Erfindung, eine Distanzmessvorrichtung zu schaffen, die bei kostengünstigem Aufbau die Bestimmung auch großer Distanzen ermöglicht.

Diese Aufgabe wird durch eine Distanzmessvorrichtung mit den Merkmalen des Anspruchs 1 gelöst, und insbesondere dadurch, dass zwischen den Lichtempfänger und die Integratoren eine Vergleichseinrichtung mit wenigstens einer Schaltschwelle geschaltet ist, die im Wesentlichen auf den Wert Null eingestellt ist, wobei mittels der Integratoren das Ausgangssignal der Vergleichseinrichtung aufintegrierbar ist.

Bei der erfindungsgemäßen Distanzmessvorrichtung wird vor der jeweiligen Signalintegration in den beiden Empfangskanälen das Empfangssignal von wenigstens einer Vergleichseinrichtung mit einer Schaltschwelle verglichen, die im Wesentlichen den Wert Null besitzt. Mittels der Integratoren der beiden Empfangskanäle wird nicht unmittelbar das Ausgangssignal des verwendeten Lichtempfängers, sondern das Ausgangssignal der Vergleichseinrichtung aufintegriert, wobei es sich bei diesem Ausgangssignal insbesondere um ein binäres Schaltsignal handelt (z.B. +1 und 0, oder +1 und -1).

Unter einer Schaltschwelle, die im Wesentlichen den Wert Null besitzt, ist im Zusammenhang mit der Erfindung eine Schaltschwelle zu verstehen, die entweder genau den Wert Null besitzt oder so nahe an dem Wert Null liegt, dass sich die Schaltschwelle noch innerhalb des Rauschens des Empfangssignals befindet.

Aufgrund des Vergleichs des Empfangssignals mit einem Schwellwert von ungefähr Null und aufgrund des Aufintegrierens lediglich des Ausgangssignals der Vergleichseinrichtung ist gewährleistet, dass zum einen die gesamte Signalenergie des Empfangssignals zum Messergebnis beiträgt und zum anderen lediglich die Phaseninformation des Empfangssignals berücksichtigt wird. Die in dem Empfangssignal enthaltene Amplitudeninformation wird dagegen bewusst außer Acht gelassen. Da die Schaltschwelle der Vergleichseinrichtung auf einen Wert von ungefähr Null gesetzt wird, können auch geringe Empfangssignale noch erfasst und somit relativ große Messdistanzen berücksichtigt werden, insbesondere im Vergleich zu bekannten Distanzmessvorrichtungen mit Pulslaufzeitverfahren, deren Schaltschwelle beispielsweise das 3- bis 5-fache des RMS-Rauschens beträgt.

Dabei wird bewusst in Kauf genommen, dass aufgrund der geringen Schaltschwelle zwar auch das Signalrauschen die Vergleichseinrichtung auslöst. Da die Schaltschwelle jedoch den Wert Null oder einen Wert sehr nahe an dem Wert Null besitzt, liegt zumindest näherungsweise eine Gleichverteilung des Signalrauschens des Empfangssignals bezüglich der Schaltschwelle vor. Aufgrund dieser Gleichverteilung mittelt sich das Signalrauschen letztlich heraus, während die Signalenergie des Nutzsignals vollständig erfasst wird. Somit steht in den beiden Empfangskanälen ein hinreichendes Nutzsignal zur Verfügung.

Durch die Verwendung einer Vergleichseinrichtung mit einer Schaltschwelle von ungefähr Null ist es somit möglich, durch eine verlängerte Integrationszeit auch Sendelichtpulse von geringer Intensität zu erfassen und somit den Messbereich der Distanzmessvorrichtung zu erhöhen. Eine Verlängerung der Integrationszeit kann insbesondere durch das aufeinander folgende Aussenden und Empfangen mehrerer Sendelichtpulse und anschließende Mittelwertbildung der Messergebnisse erfolgen (mehrere "Schüsse"). Dieses Messprinzip kann bei einem sehr einfachen Aufbau der Distanzmessvorrichtung und somit auf kostengünstige Weise verwirklicht werden.

Die Schaltschwelle der Vergleichseinrichtung ist insbesondere derart auf im Wesentlichen den Wert Null eingestellt, dass die Schaltschwelle innerhalb des RMS-Werts (Root Mean Square) des Rauschens des Empfangssignals liegen kann.

Die Vergleichseinrichtung kann als einfacher Komparator ausgebildet sein, bei dem das Empfangssignal mit einer einzigen Schaltschwelle verglichen wird. Vorzugsweise entspricht die Schaltschwelle in diesem Fall dem Offset des Komparators (Eingangs-Offsetspannung).

Alternativ hierzu kann die Vergleichseinrichtung das Empfangssignal mit einer oberen Schaltschwelle und einer unteren Schaltschwelle vergleichen, die auf unterschiedliche Werte, jedoch beide im Wesentlichen auf den Wert Null eingestellt sind. Insbesondere kann die Vergleichseinrichtung als Schwellwertschalter - beispielsweise Schmitt-Trigger - ausgebildet sein, bei dem die obere Schaltschwelle und die untere Schaltschwelle eine Hysterese bilden. In diesem Fall ist es beispielsweise möglich, dass die eine Schaltschwelle auf den Wert Null eingestellt ist und die andere Schaltschwelle dem Offset oder Hysteresewert der Vergleichseinrichtung entspricht. Alternativ hierzu können die untere Schaltschwelle und die obere Schaltschwelle auch symmetrisch um den Wert Null liegen.

Um in dem zweiten Empfangskanal die für die Abstandsbestimmung notwendige Zeitinformation zu erhalten, wird mittels des Signalintegrators des zweiten Empfangskanals lediglich ein von der Länge der Messstrecke abhängiger Teil des Ausgangssignals der Vergleichseinrichtung aufintegriert. Hierfür ist es bevorzugt, wenn die Distanzmessvorrichtung eine Steuerschaltung aufweist, durch für den zweiten Empfangskanal ein Zeitfenster erzeugbar ist, das eine vorbestimmte zeitliche Beziehung zu dem Aussenden des Lichtsendepulses besitzt und das die Integrationsdauer in dem zweiten Empfangskanal festlegt. Mit anderen Worten erfolgen der Beginn und/oder das Ende der Integration mittels des Integrators des zweiten Empfangskanals nach Ablauf einer vorbestimmten Zeitdauer ab dem Aussenden des Sendelichtpulses.

Beispielsweise kann ein entsprechendes elektrisches Pulssignal, das auch den Lichtsender ansteuert, mit einer vorbestimmten Verzögerung (Delay) an einen Schalter im zweiten Empfangskanal weitergeleitet werden. Gemäß einer besonders vorteilhaften Weiterbildung der Erfindung ist jedoch vorgesehen, dass die Distanzmessvorrichtung einen Referenzempfänger, eine Referenzvergleichseinrichtung und einen Referenzzeitfensterschalter aufweist, wobei der Referenzempfänger mit dem Lichtsender optisch gekoppelt ist, beispielsweise über einen Lichtleiter. Hierdurch erzeugt der Referenzempfänger beim jedem Aussenden eines Sendelichtpulses ein entsprechendes Referenzsignal, wobei eine vorbestimmte Zeitverzögerung festgelegt ist. Das Referenzsignal wird mittels der Referenzvergleichseinrichtung mit wenigstens einer Schaltschwelle verglichen, die auf einen Betrag größer Null eingestellt ist. Der Referenzzeitfensterschalter ist mit dem Ausgang der Referenzvergleichseinrichtung verbunden und erzeugt ein Referenzzeitfenster für die Integration in dem zweiten Empfangskanal. Der Referenzzeitfensterschalter dient also als "ENABLE-Schalter" zum zeitweiligen Aktivieren des Signalintegrators des zweiten Empfangskanals.

Der Referenzzeitfensterschalter wird mittels des Referenzempfängers und der Referenzvergleichseinrichtung somit letztlich optisch vom Lichtsender angesteuert. Der besondere Vorteil dieser Weiterbildung besteht nicht nur darin, dass der Sendepfad und der Empfangspfad der Distanzmessvorrichtung elektrisch getrennt sind, so dass ein elektrisches Übersprechen von der Senderseite auf die Empfängerseite verhindert wird. Vor allem jedoch können der jeweilige Messkopfbereich des Lichtempfängers und des Referenzempfängers in analoger Anordnung aufgebaut werden (Empfangselement, Verstärker, Vergleichseinrichtung), so dass für diese beiden Pfade ein ähnlicher Temperaturgang bewirkt wird und eventuelle Temperatureffekte sich somit nicht nachteilig auf die Messgenauigkeit auswirken. Hierdurch genügt es, die Zeitverzögerung, die durch die Lichtübertragung zum Referenzempfänger und die weitere Signalverarbeitung im zugeordneten Verstärker, in der Referenzvergleichseinrichtung und durch den Referenzzeitfensterschalter verursacht wird, in einer einmaligen Eichmessung zu ermitteln, so dass die einmalig ermittelte Zeitverzögerung den nachfolgenden Messungen zugrunde gelegt werden kann. Es ist somit also nicht erforderlich, die Zeitverzögerung für die Steuerung der Integration im zweiten Empfangskanal durch regelmäßige Eichmessungen - beispielsweise durch regelmäßiges Nachmessen einer Referenzdistanz - für jede Messung neu zu bestimmen.

Soweit die Schaltschwelle der genannten Referenzvergleichseinrichtung auf einen Betrag größer Null eingestellt sein soll, ist hierunter zu verstehen, dass die Schaltschwelle außerhalb des RMS-Rauschens des Referenzsignals liegen soll. Insbesondere kann die Schaltschwelle um einen Faktor von 3 bis 5 oberhalb des RMS-Rauschens des Referenzsignals liegen.

Hinsichtlich der Auswertung der für den ersten Empfangskanal und den zweiten Empfangskanal ermittelten Integrationswerte ist es bevorzugt, wenn eine Differenz und/oder ein Quotient dieser Integrationswerte ermittelt wird bzw. werden. Insbesondere kann eine Differenz der Integrationswerte anhand des Integrationswerts des ersten Empfangskanals normiert werden, um hierdurch die Laufzeit des Sendelichtpulses und somit die Länge der Messstrecke zu bestimmen.

Die Erfindung bezieht sich auch auf ein Verfahren zum Ermitteln einer Distanz nach dem Lichtlaufzeitprinzip, bei dem wenigstens ein Sendelichtpuls entlang einer Messstrecke ausgesendet wird, der Sendelichtpuls nach Durchlaufen der Messstrecke empfangen und ein entsprechendes Empfangssignal erzeugt wird, in einem ersten Empfangskanal eine Signalintegration während der Dauer des gesamten Empfangssignals erfolgt, und in einem zweiten Empfangskanal eine Signalintegration lediglich während eines Teils der Dauer des Empfangssignals erfolgt, der von der Länge der Messstrecke abhängt, wobei mittels einer Vergleichseinrichtung das Empfangssignal mit wenigstens einer Schaltschwelle verglichen wird, die im Wesentlichen den Wert Null besitzt, und wobei in den beiden Empfangskanälen jeweils das Ausgangssignal der Vergleichseinrichtung aufintegriert wird.

Weitere Ausführungsformen der Erfindung sind in den Unteransprüchen genannt.

Die Erfindung wird nachfolgend lediglich beispielhaft unter Bezugnahme auf die Zeichnungen erläutert.

Fig. 1    zeigt ein Schaltbild einer Distanzmessvorrichtung.

Fig. 2    zeigt den jeweiligen Signalverlauf an verschiedenen Punkten der Anordnung gemäß Fig. 1.

Fig. 3    zeigt die Signalverläufe gemäß Fig. 2 in einer vereinfachten Darstellung ohne Rauschen.

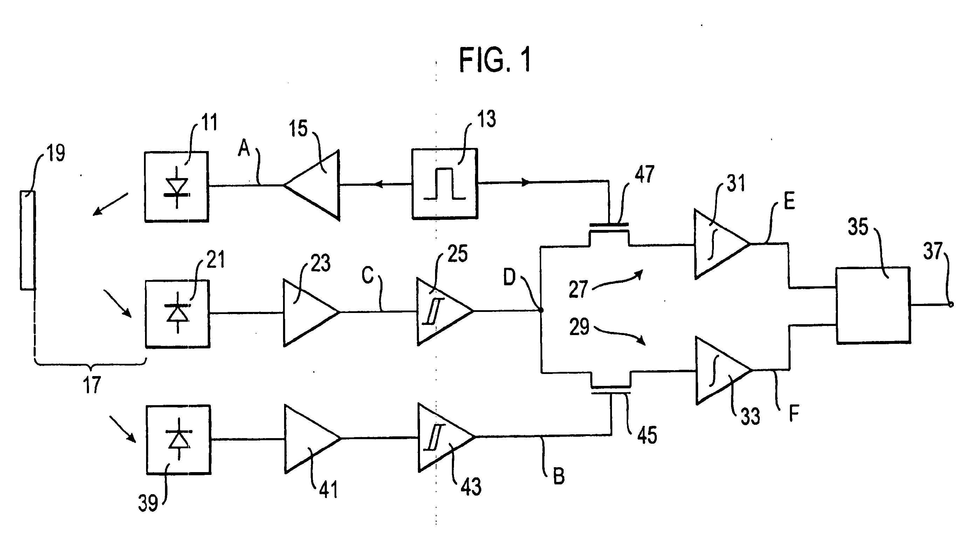

Die in Fig. 1 gezeigte Distanzmessvorrichtung besitzt einen Lichtsender 11, der von einem Pulsgenerator 13 über einen Verstärker 15 zum Aussenden von Sendelichtpulsen angesteuert wird. Die Sendelichtpulse werden entlang einer Messstrecke 17 in Richtung eines Targets 19 (z.B. Retroreflektor) ausgesendet. An dem Target 19 wird das Sendelicht in Richtung der Distanzmessvorrichtung reflektiert und beaufschlagt dort einen Lichtempfänger 21, der ein entsprechendes Empfangssignal erzeugt. Das Empfangssignal wird in einem Transimpedanzverstärker 23 verstärkt (Strom/ Spannungs-Wandlung) und danach einem Schwellwertschalter 25 zugeführt. Dieser vergleicht das verstärkte Empfangssignal mit einer Schaltschwelle S, die allenfalls geringfügig größer ist als der Wert Null und jedenfalls innerhalb des RMS-Rauschens des verstärkten Empfangssignals liegt. In Abhängigkeit von dem Ergebnis dieses Vergleichs erzeugt der Schwellwertschalter 25 ein binäres Ausgangssignal.

Das Ausgangssignal des Schwellwertschalters 25 wird in einem ersten Empfangskanal 27 und einem hierzu parallelen zweiten Empfangskanal 29 weiter verarbeitet. Dort wird das Ausgangssignal des Schwellwertschalters 25 mittels eines jeweiligen Integrators 31 bzw. 33 zu einem ersten Integrationswert $I_1$ (erster Empfangskanal 27) bzw. einem zweiten Integrationswert $I_2$ (zweiter Empfangskanal 29) aufintegriert. Die beiden Empfangskanäle 27, 29 unterscheiden sich hinsichtlich der jeweiligen Integrationsdauer, wie nachfolgend noch erläutert wird. Die Integrationswerte $I_1$, $I_2$ werden einer gemeinsamen Auswerteeinrichtung 35 zugeführt, die einen Signalausgang 37 besitzt.

Die Distanzmessvorrichtung besitzt ferner einen Referenzempfänger 39. Diesem wird beim Aussenden eines Sendelichtpulses ein Teil des Sendelichts des Lichtsenders 11 direkt - also ohne Durchlaufen der Messstrecke 17 - zugeführt, beispielsweise über einen Lichtleiter (nicht dargestellt). Der Referenzempfänger 39 erzeugt ein entsprechendes Referenzsignal, das in einem nachgeschalteten Transimpedanzverstärker 41 verstärkt und anschließend einem Referenzschwellwertschalter 43 zugeführt wird. Dieser vergleicht das verstärkte Referenzsignal mit einer Schaltschwelle, die deutlich außerhalb des RMS-Rauschens des verstärkten Referenzsignals liegt. In Abhängigkeit von dem Ergebnis dieses Vergleichs erzeugt der Referenzschwellwertschalter 43 ein binäres Ausgangssignal, das einen Referenzzeitfensterschalter 45 ansteuert. Der Referenzzeitfensterschalter 45 ist in dem zweiten Empfangskanal 29 vor dem Integrator 33 angeordnet und dient zur Aktivierung und Deaktivierung des Integrators 33. Hierdurch bestimmt der Referenzzeitfensterschalter 45 die Integrationsdauer im zweiten Empfangskanal 29.

Im ersten Empfangskanal 27 ist in entsprechender Anordnung vor dem Integrator 31 ein Zeitfensterschalter 47 vorgesehen, der letztlich in Abhängigkeit von den Signalen des Pulsgenerators 13 angesteuert wird.

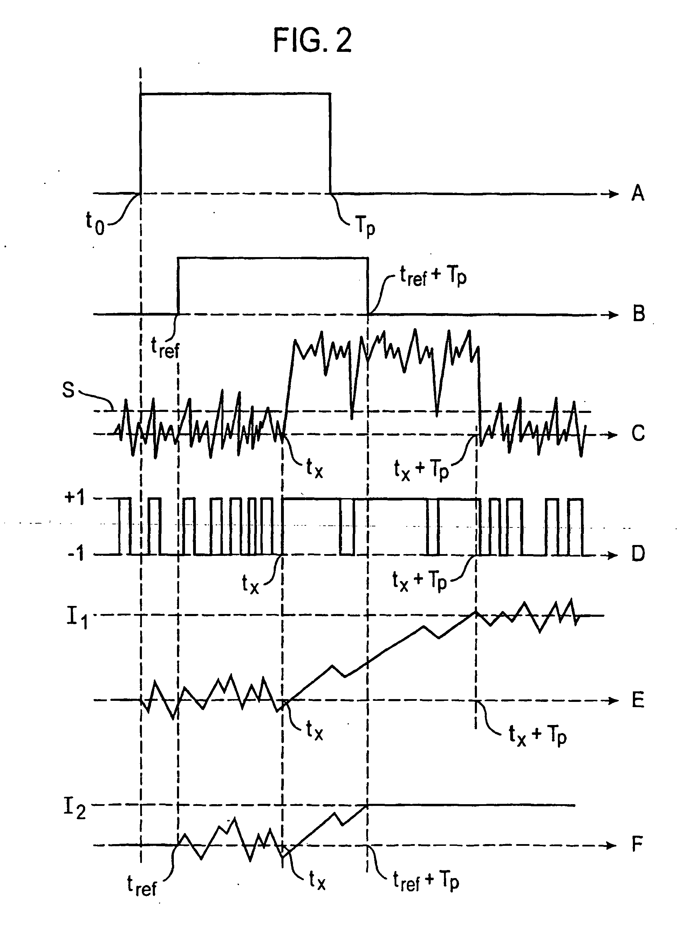

Die in Fig. 1 gezeigte Distanzmessvorrichtung dient zum Ermitteln der Distanz zu dem Target 19 - also der Länge der Messstrecke 17 - nach dem Lichtlaufzeitprinzip. Hierfür werden die Ausgangssignale des Schwellwertschalters 25 in dem ersten Empfangskanal 27 vollständig und in dem zweiten Empfangskanal 29 lediglich zu einem solchen Teil aufintegriert, der von der Laufzeit der Sendelichtpulse entlang der Messstrecke 17 abhängt. Die Auswerteeinrichtung 35 berechnet aus den Integrationswerten $I_1$, $I_2$ die Distanz der Distanzmessvorrichtung zu dem Target 19, und ein entsprechender Wert wird am Signalausgang 37 ausgegeben. Dies wird nachfolgend anhand von Fig. 2 näher erläutert.

Fig. 2 zeigt den jeweiligen Signalverlauf an verschiedenen Bezugspunkten A bis F der Schaltung gemäß Fig. 1.

Diagramm A zeigt den Verlauf des verstärkten Signalpulses des Pulsgenerators 13. Dieser Verlauf entspricht dem Signalverlauf des Sendelichtpulses des Lichtsenders 11. Der Sendelichtpuls wird zu einem Zeitpunkt to erzeugt und dauert für eine Signaldauer $T_P$ an.

Diagramm B zeigt das Ausgangssignal des Referenzschwellwertschalters 43. Infolge der optischen Kopplung des Referenzempfängers 39 mit dem Lichtempfänger 11 und der weiteren Verarbeitung des Referenzsignals in dem Transimpedanzverstärker 41 und dem Referenzschwellwertschalter 43 besitzt das Ausgangssignal des Referenzschwellwertschalters 43 zwar dieselbe Länge $T_P$ wie der zugehörige Sendelichtpuls des Lichtsenders 11; das Signal ist diesbezüglich jedoch um die Zeitdauer $t_{ref}$ verzögert. Das in dem Diagramm B von Fig. 2 gezeigte Ausgangssignal des Referenzschwellwertschalters 43 dient als Referenzzeitfenster zur zeitweiligen Aktivierung des Integrators 33 des zweiten Empfangskanals 29. Es ist zu beachten, dass dieses Zeitfenster stets in festem zeitlichen Bezug zu dem zugehörigen Sendelichtpuls gemäß Diagramm A steht, unabhängig von der Länge der Messstrecke 17.

Diagramm C von Fig. 2 zeigt das verrauschte Empfangssignal des Lichtempfängers 21 am Ausgang des zugeordneten Transimpedanzverstärkers 23. Das Signal fluktuiert bis zu einem Zeitpunkt $t_x$, der der Laufzeit des Sendelichtpulses entlang der Messstrecke 17 entspricht, aufgrund des elektronischen Rauschens um den Wert Null. Ab dem Zeitpunkt $t_x$ - also sobald der ausgesendete Sendelichtpuls den Lichtempfänger 21 beaufschlagt und in ein elektrisches Empfangssignal gewandelt wird - fluktuiert das Ausgangssignal des Transimpendanzverstärkers 23 um einen Wert größer Null, um nach Ablauf der Dauer $T_P$ des Sendelichtpulses wieder um den Wert Null zu fluktuieren.

In dem Diagramm C ist ferner die Schaltschwelle S des Schwellwertschalters 25 gezeigt, die ungefähr den Wert Null besitzt und zum Zwecke einer besseren Erkennbarkeit in Fig. 2 mit einem deutlichen Abstand von dem Wert Null eingezeichnet ist.

Diagramm D von Fig. 2 zeigt das binäre Ausgangssignal des Schwellwertschalters 25. Aufgrund des Rauschens des Empfangssignals des Lichtempfängers 21 und aufgrund der geringen Schaltschwelle S fluktuiert dieses Ausgangssignal bis zum Eintreffen des Sendelichtpulses (Zeitpunkt $t_x$) ständig zwischen einem oberen und einem unteren Wert (+ 1 und 0, oder +1 und -1). Sobald jedoch der Lichtempfänger 21 von dem am Target 19 reflektierten Sendelichtpuls beaufschlagt wird, nimmt das Ausgangssignal des Schwellwertschalters 25 aufgrund der geringen Schaltschwelle S nahezu während der gesamten Dauer $T_P$ des Sendelichtpulses den oberen Wert ein. Anschließend fluktuiert das Ausgangssignal wieder ständig zwischen dem oberen Wert und dem unteren Wert.

Diagramm E von Fig. 2 zeigt das Ausgangssignal des Integrators 31 des ersten Empfangskanals 27, also das aufintegrierte Ausgangssignal des Schwellwertschalters 25. Aufgrund entsprechender Ansteuerung des zugeordneten Zeitfensterschalters 47 erfolgt die Integration beispielsweise ab dem Zeitpunkt to, zu dem der Sendelichtpuls ausgesendet wird, und bis zu einem Zeitpunkt deutlich nach jenem Zeitpunkt $t_x + T_P$, zu dem der Sendelichtpuls vollständig empfangen worden ist und das Empfangssignal des Lichtempfängers 21 wieder um den Wert Null fluktuiert. Der genaue Beginn und das genaue Ende der Integrationsdauer des Integrators 31 sind nicht kritisch. Wichtig ist lediglich, dass zum einen für den gesamten erwünschten Messbereich das Empfangssignal des Lichtempfängers 21 stets vollständig erfasst wird, und dass zum anderen die Integrationsdauer derart begrenzt ist, dass bezüglich aufeinander folgender Sendelichtpulse die Eindeutigkeit des Integrationswerts $I_1$ des Integrators 31 gewährleistet ist.

Das Ausgangssignal des Integrators 31 ist in Fig. 2 für eine differentielle Integration gezeigt. Aus dem Diagramm E ist ersichtlich, dass vor dem Eintreffen des Sendelichtpulses (Zeitpunkt $t_x$) das Ausgangssignal des Integrators 31 entsprechend den Ausgangssignalen des Schwellwertschalters 25 letztlich um den Wert Null fluktuiert. Mit dem Ende des Empfangssignals des Lichtempfängers 21 (Zeitpunkt $t_x + T_P$) ist ein erster Integrationswert $I_1$ erreicht. Anschließend fluktuiert das Ausgangssignal des Integrators 31 des ersten Empfangskanals 27 nur noch um diesen Integrationswert $I_1$.

Diagramm F von Fig. 2 zeigt das Ausgangssignal des Integrators 33 des zweiten Empfangskanals 29. Die Integration beginnt mit dem Beginn $t_{ref}$ des mittels des Referenzschwellwertschalters 43 und des Referenzzeitfensterschalters 45 erzeugten Referenzzeitfensters gemäß Diagramm B, wobei dies jedoch nicht zwingend notwendig ist. Wie in dem ersten Empfangskanal 27 erfolgt ab der Beaufschlagung des Lichtempfängers 21 mit dem Sendelichtpuls (Zeitpunkt $t_x$) ein Anstieg des Ausgangssignals. Dieser Zeitpunkt $t_x$ hängt von der Laufzeit des Sendelichtpulses und somit von der Länge der Messstrecke 17 ab. Der Anstieg des Ausgangssignals des Integrators 33 erfolgt bis zur Deaktivierung des Integrators 33 am Ende des Referenzzeitfensters (Zeitpunkt $t_{ref} + T_P$). Das Ende der Integrationsdauer steht in fester zeitlicher Beziehung zu dem Aussenden des Sendelichtpulses mittels des Lichtsenders 11 und ist unabhängig von der Länge der Messstrecke 17, wie vorstehend bereits erläutert wurde. Wichtig ist, dass das Empfangssignal des Lichtempfängers 21 bzw. die entsprechend erzeugten Ausgangssignale des Schwellwertschalters 25 in Abhängigkeit von der Laufzeit $t_x$ des Sendelichtpulses lediglich teilweise erfasst werden, wobei das Empfangssignal in dem dargestellten Beispiel hinten "abgeschnitten" wird.

Die gesuchte Distanz zu dem Target 19 ist proportional zu der Laufzeit $t_x$ des Sendelichtpulses entlang der Messstrecke 17 zum Target 19 und von diesem zurück. Diese Laufzeit $t_x$ ist wiederum proportional zu der Differenz zwischen dem Integrationswert $I_1$ des ersten Empfangskanals 27 und dem Integrationswert $I_2$ des zweiten Empfangskanals 29, normiert hinsichtlich des Integrationswerts $I_1$ des ersten Empfangskanals 27:

$$t_x \sim (I_1 - I_2)/I_1 = 1 - I_2/I_1$$

Wie aus Diagramm C von Fig. 2 ersichtlich ist, wird bei der erfindungsgemäßen Distanzmessvorrichtung nicht versucht, das Empfangssignal des Lichtempfängers 21 von dem Signalrauschen zu diskriminieren. Stattdessen wird die Schaltschwelle S des Schwellwertschalters 25 so nahe an den Wert Null gelegt, dass zwar auch das Signalrauschen Schaltvorgänge des Schwellwertschalters 25 auslöst. Die Schaltschwelle S liegt also mitten im Signalrauschen. Allerdings ist hierdurch sicher gestellt, dass bei sehr großen Messstrecken 17 auch geringe Empfangssignale (Zeitdauer $t_x$ bis $t_x + T_P$) noch nahezu vollständig erfasst werden. Dabei wird in Kauf genommen, dass auch während dieser Dauer des Empfangssignals aufgrund des Signalrauschens die Schaltschwelle S zeitweise unterschritten wird, wie dies in Diagramm C von Fig. 2 beispielhaft für zwei Zeitpunkte gezeigt ist (vgl. entsprechendes Ausgangssignal des Schwellwertschalters 25 gemäß Diagramm D von Fig. 2).

Wichtig ist jedoch, dass die Schaltschwelle S - abweichend von der übertriebenen Darstellung in Diagramm C von Fig. 2 - so nahe an dem Wert Null liegt, dass für das Signalrauschen (Diagramm C) im Wesentlichen eine Gleichverteilung bezüglich der Schaltschwelle S vorliegt und dementsprechend auch die oberen und unteren Ausgangssignale des Schwellwertschalters 25 (Diagramm D) gleichverteilt sind, solange der Lichtempfänger 21 noch nicht oder nicht mehr von dem Sendelichtpuls beaufschlagt wird. Daher trägt das Signalrauschen letztlich nicht zu den Integrationswerten $I_1$ und $I_2$ der beiden Empfangspfade 27, 29 bei. Die erfindungsgemäße Distanzmessvorrichtung ermöglicht es somit, durch entsprechende Verlängerung der Integrationszeiten eine Vergrößerung des Messbereichs (größere Messstrecken 17) zu erreichen, da auch geringe Empfangssignale, die sich kaum vom Signalrauschen abheben, noch erfasst werden können.

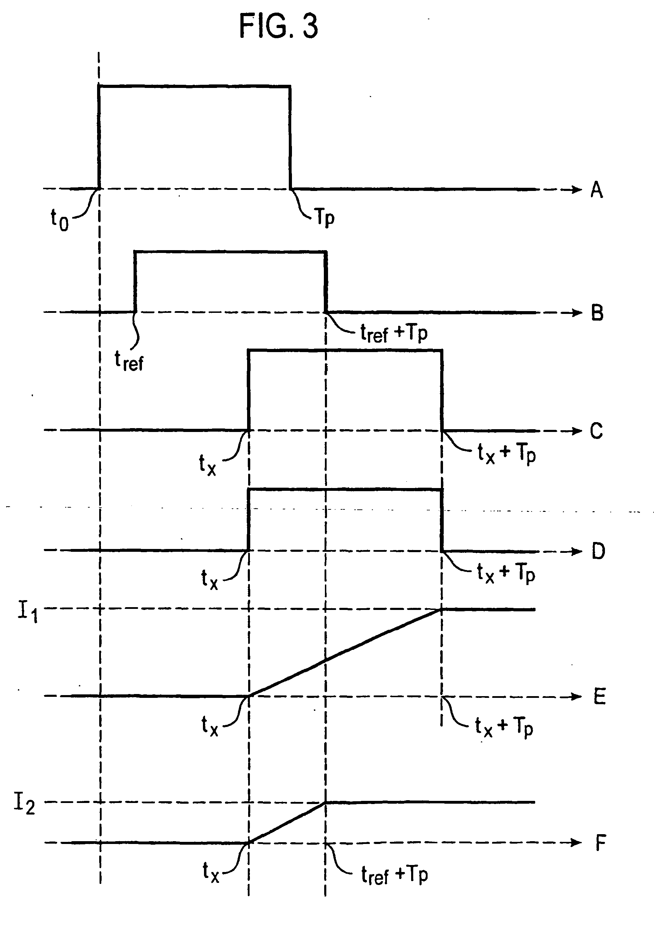

Fig. 3 zeigt zur deutlicheren Illustrierung des der erfindungsgemäßen Distanzmessvorrichtung zugrunde liegenden Messprinzips die Signalverläufe gemäß Fig. 2 in idealisierter Form ohne Signalrauschen. Es ist zu erkennen, dass in dem ersten Empfangskanal 27 das Empfangssignal des Lichtempfängers 21 (Diagramm C) bzw. das entsprechende Ausgangssignals der Vergleichseinrichtung 25 (Diagramm D) vollständig zu dem Integrationswert $I_1$ aufintegriert wird (Diagramm E). In dem zweiten Empfangskanal 29 wird hingegen lediglich ein Teil des Empfangssignals erfasst (Integrationswert $I_2$ gemäß Diagramm F). Da hier der Integrationsbeginn von der Laufzeit $t_x$ des Sendelichtpulses abhängt und das Ende der Integrationsdauer ($t_{ref} + T_P$) unabhängig von der Laufzeit $t_x$ ist, enthält der Integrationswert $I_2$ des zweiten Empfangskanals 29 eine Information über die Laufzeit $t_x$ des Sendelichtpulses und somit über die Länge der Messstrecke 17.

Schließlich ist zu der in Fig. 1 gezeigten Distanzmessvorrichtung noch anzumerken, dass anstelle einer einzigen Vergleichseinrichtung 25 für jeden Empfangskanal 27, 29 auch eine eigene Vergleichseinrichtung mit einer Schaltschwelle von ungefähr Null vorgesehen sein kann.

Bezugszeichenliste

| 11 | Lichtsender |
| 13 | Pulsgenerator |
| 15 | Verstärker |
| 17 | Messstrecke |
| 19 | Target |
| 21 | Lichtempfänger |
| 23 | Transimpedanzverstärker |
| 25 | Schwellwertschalter |
| 27 | erster Empfangskanal |
| 29 | zweiter Empfangskanal |
| 31 | Integrator |
| 33 | Integrator |
| 35 | Auswerteeinrichtung |
| 37 | Signalausgang |
| 39 | Referenzempfänger |
| 41 | Transimpedanzverstärker |
| 43 | Referenzschwellwertschalter |
| 45 | Referenzzeitfensterschalter |
| 47 | Zeitfensterschalter |

| $I_1, I_2$ | Integrationswert |
| $S$ | Schaltschwelle |
| $t_0$ | Beginn des Sendelichtpulses |
| $T_P$ | Dauer des Sendelichtpulses |
| $t_{ref}$ | Beginn des Referenzzeitfensters |
| $t_x$ | Laufzeit des Sendelichtpulses |

**Patentansprüche**

1. Distanzmessvorrichtung zum Ermitteln einer Distanz nach dem Lichtlaufzeitprinzip, mit:

   - einem Lichtsender (11) zum Aussenden wenigstens eines Sendelichtpulses entlang einer Messstrecke (17),
   - wenigstens einem Lichtempfänger (21) zum Empfangen des Sendelichtpulses und zum Erzeugen eines entsprechenden Empfangssignals,
   - einem Integrator (31) eines ersten Empfangskanals (27), der zu einer Integration während der Dauer des gesamten Empfangssignals ausgebildet ist, und
   - einem Integrator (33) eines zweiten Empfangskanals (29), der zur Integration lediglich während eines Teils der Dauer des Empfangssignals ausgebildet ist, der von der Länge der Messstrecke (17) abhängt,

   **dadurch gekennzeichnet,**
   **dass** zwischen den Lichtempfänger (21) und die Integratoren (31, 33) eine Vergleichseinrichtung (25) mit wenigstens einer Schaltschwelle (S) geschaltet ist, die im Wesentlichen auf den Wert Null eingestellt ist, wobei mittels der Integratoren (31, 33) das Ausgangssignal der Vergleichseinrichtung (25) aufintegrierbar ist.

2.  Distanzmessvorrichtung nach Anspruch 1,
    **dadurch gekennzeichnet,**
    **dass** die Schaltschwelle (S) der Vergleichseinrichtung (25) innerhalb des RMS-Werts des Rauschens des Empfangssignals liegt.

3.  Distanzmessvorrichtung nach einem der vorhergehenden Ansprüche,
    **dadurch gekennzeichnet,**
    **dass** die Schaltschwelle (S) derart im Wesentlichen auf den Wert Null eingestellt ist, dass das Rauschen des Empfangssignals - solange der Lichtempfänger (21) nicht von dem Sendelichtpuls beaufschlagt wird - bezüglich der Schaltschwelle (S) möglichst gleichverteilt ist.

4.  Distanzmessvorrichtung nach einem der vorhergehenden Ansprüche,
    **dadurch gekennzeichnet,**
    **dass** die Schaltschwelle (S) dem Offset der Vergleichseinrichtung (25) entspricht.

5.  Distanzmessvorrichtung nach einem der vorhergehenden Ansprüche,
    **dadurch gekennzeichnet,**
    **dass** die Vergleichseinrichtung (25) eine obere Schaltschwelle und eine untere Schaltschwelle besitzt, die im Wesentlichen auf den Wert Null eingestellt sind.

6.  Distanzmessvorrichtung nach einem der vorhergehenden Ansprüche,
    **dadurch gekennzeichnet,**
    **dass** mittels der Vergleichseinrichtung (25) das Empfangssignal mit der Schaltschwelle (S) vergleichbar ist und in Abhängigkeit von dem Ergebnis des Vergleichs ein binäres Ausgangssignal erzeugbar ist.

7.  Distanzmessvorrichtung nach einem der vorhergehenden Ansprüche,
    **dadurch gekennzeichnet,**
    **dass** die Distanzmessvorrichtung eine Steuerschaltung (39, 41, 43, 45) aufweist, durch die ein Zeitfenster ($t_{ref}$ bis $t_{ref}$ + $T_P$) erzeugbar ist, das eine vorbestimmte zeitliche Beziehung zu dem Aussenden des Lichtsendepulses besitzt und das den Beginn und/ oder das Ende der Integrationsdauer in dem zweiten Empfangskanal (29) festlegt.

8.  Distanzmessvorrichtung nach einem der vorhergehenden Ansprüche,
    **dadurch gekennzeichnet,**

    **dass** die Distanzmessvorrichtung einen Referenzempfänger (39), eine Referenzvergleichseinrichtung (43) und einen Referenzzeitfensterschalter (45) aufweist, wobei der Referenzempfänger (39) mit dem Lichtsender (11) optisch gekoppelt ist, um beim Aussenden des Sendelichtpulses ein entsprechendes Referenzsignal zu erzeugen, wobei mittels der Referenzvergleichseinrichtung (43) das Referenzsignal mit wenigstens einer Schaltschwelle vergleichbar ist, die auf einen Betrag größer Null eingestellt ist, und wobei der Referenzzeitfensterschalter (45) mittels der Referenzvergleichseinrichtung (43) derart ansteuerbar ist, dass ein Zeitfenster ($t_{ref}$ bis $t_{ref}$ + Tp) für die Festlegung der Integrationsdauer in dem zweiten Empfangskanal 29 erzeugt wird.

9.  Distanzmessvorrichtung nach einem der vorhergehenden Ansprüche,
    **dadurch gekennzeichnet,**
    **dass** die Distanzmessvorrichtung eine Auswerteschaltung (35) aufweist, die mit dem Ausgang des Integrators (31) des ersten Empfangskanals (27) und mit dem Ausgang des Integrators (33) des zweiten Empfangskanals (29) verbunden ist, wobei mittels der Auswerteschaltung (35) eine Differenz und/ oder ein Verhältnis der Ausgangssignale der Integratoren (31, 33) ermittelbar ist.

10. Distanzmessvorrichtung nach einem der vorhergehenden Ansprüche,
    **dadurch gekennzeichnet,**
    **dass** die Distanzmessvorrichtung ferner einen Zeitfensterschalter (47) des ersten Empfangskanals (27) aufweist, mittels dessen ein Zeitfenster für die Festlegung der Integrationsdauer im ersten Empfangskanal (27) erzeugbar ist.

11. Verfahren zum Ermitteln einer Distanz nach dem Lichtlaufzeitprinzip, bei dem:

    - wenigstens ein Sendelichtpuls entlang einer Messstrecke (17) ausgesendet wird,
    - der Sendelichtpuls nach Durchlaufen der Messstrecke empfangen und ein entsprechendes Empfangssignal erzeugt wird,
    - in einem ersten Empfangskanal (27) eine Signalintegration während der Dauer des gesamten Empfangssignals erfolgt, und
    - in einem zweiten Empfangskanal (29) eine Signalintegration lediglich während eines Teils der Dauer des Empfangssignals erfolgt, der von der Länge der Messstrecke (17) abhängt,

    **dadurch gekennzeichnet,**
    **dass** mittels einer Vergleichseinrichtung (25) das Empfangssignal mit wenigstens einer Schaltschwelle (S) verglichen wird, die im Wesentlichen den Wert Null besitzt, wobei in den beiden Empfangskanälen (27, 29) das Ausgangssignal der Vergleichseinrichtung (25) aufintegriert wird.

12. Verfahren nach Anspruch 11, **dadurch gekennzeichnet, dass** der Sendelichtpuls auch einem Referenzempfänger (39) zugeführt wird, der ein entsprechendes Referenzsignal erzeugt, wobei das Referenzsignal mit wenigstens einer Schaltschwelle verglichen wird, die einen Wert größer Null besitzt, und wobei in Abhängigkeit von dem Ergebnis des Vergleichs ein Zeitfenster zum Festlegen der Integrationsdauer in dem zweiten Empfangskanal (29) erzeugt wird.

## Claims

1. A distance measurement device for the determination of a distance in accordance with the principle of the time of flight of light, comprising

   - a light transmitter (11) for the transmission of at least one transmitted light pulse along a measurement path (17);
   - at least one light receiver (21) for the reception of the transmitted light pulse and for the generation of a corresponding received signal;
   - an integrator (31) of a first reception channel (27) which is made for an integration during the duration of the total received signal; and
   - an integrator (33) of a second reception channel (29) which is made for integration only during a part of the duration of the received signal said part depending on the length of the measurement path (17),

   **characterised in that** a comparator (25) is connected between the light receiver (21) and the integrators (31, 33) and has at least one switching threshold (S) which is substantially set to the value of zero, with the output signal of the comparator (25) being able to be up integrated by means of the integrators (31, 33).

2. A distance measurement device in accordance with claim 1, **characterised in that** the switching threshold (S) of the comparator (25) lies within the RMS value of the noise of the received signal.

3. A distance measurement device in accordance with any one of the preceding claims, **characterised in that** the switching threshold (S) is essentially set to the value zero such that the noise of the received signal is distributed as evenly as possible with respect to the switching threshold (S) - as long as the light receiver (21) is not impinged by the transmitted light pulse.

4. A distance measurement device in accordance with any one of the preceding claims, **characterised in that** the switching threshold (S) corresponds to the offset of the comparator (25).

5. A distance measurement device in accordance with any one of the preceding claims, **characterised in that** the comparator (25) has an upper switching threshold and a lower switching threshold which are essentially set to the value zero.

6. A distance measurement device in accordance with any one of the preceding claims, **characterised in that** the received signal can be compared with the switching threshold (S) by means of the comparator (25) and a binary output signal can be generated in dependence on the result of the comparison.

7. A distance measurement device in accordance with any one of the preceding claims, **characterised in that** the distance measuring device has a control circuit (39, 41, 43, 45) by which a time window ($t_{ref}$ to $t_{ref} + T_P$) can be generated which has a predetermined time relationship to the transmission of the light transmission pulse and which fixes the start and/or the end of the integration duration in the second reception channel (29).

8. A distance measurement device in accordance with any one of the preceding claims, **characterised in that** the distance measurement device has a reference receiver (39), a reference comparator (43) and a reference time window switch (45), with the reference receiver (39) being optically coupled to the light transmitter (11) to generate a corresponding reference signal on the transmission of the transmitted light pulse, with the reference signal being comparable by means of the comparator (43) with at least one switching threshold which is set to an amount larger than zero and with the reference time window switch (45) being controllable by means of the reference comparator (43) such that a time window ($t_{ref}$ to $t_{ref} + T_P$) for the fixing of the integration duration being generated in the second reception channel (29).

9. A distance measurement device in accordance with any one of the preceding claims, **characterised in that** the distance measurement device has an evaluation circuit (35) which is connected to the output of the integrator (31) of the first reception channel (27) and to the output of the integrator (33) of the second reception channel (29), with a difference and/or a ratio of the output signals of the integrators (31, 33) being able to be determined by means of the evaluation circuit (35).

10. A distance measurement device in accordance with any one of the preceding claims, **characterised in that** the distance measurement device furthermore has a time window switch (47) of the first reception channel (27) by means of which a time window for the fixing of the integration duration in the first reception channel (27) can be generated.

11. A method for the determination of a distance in accordance with the principle of the time of flight of light, wherein:

- at least one transmitted light pulse is transmitted along a measurement path (17);
- the transmitted light pulse is received after running through the measurement path and a corresponding received signal is generated;
- in a first reception channel (27), a signal integration takes place during the duration of the total received signal; and
- in a second reception channel, a signal integration only takes place during a part of the duration of the received signal, said part depending on the length of the measurement path (17),

**characterised in that**

the received signal is compared by means of a comparator (25) with at least one switching threshold (S) which essentially has the value zero, with the output signal of the comparator (25) being up integrated in the two reception channels (27, 29).

12. A method in accordance with claim 11, **characterised in that** the transmitted light pulse is also supplied to a reference receiver (39) which generates a corresponding reference signal, with the reference signal being compared with at least one switching threshold which has a value larger than zero and with a time window being generated in dependence on the result of the comparison for the fixing of the integration duration in the second reception channel (9).

**Revendications**

1. Dispositif de mesure de distance pour déterminer une distance selon le principe du temps de parcours de la lumière, comprenant :

- un émetteur de lumière (11) pour émettre au moins une impulsion de lumière émise le long d'un trajet de mesure (17),
- au moins un récepteur de lumière (21) pour recevoir l'impulsion de lumière émise et pour générer un signal de réception correspondant,
- un intégrateur (31) d'un premier canal de réception (27) qui est réalisé pour une intégration pendant la durée de la totalité du signal de réception, et
- un intégrateur (33) d'un deuxième canal de réception (29) qui est réalisé pour une intégration simplement pendant une partie de la durée du signal de réception, qui dépend de la longueur du trajet de mesure (17),

**caractérisé en ce qu'**entre le récepteur de lumière (21) et les intégrateurs (31, 33) est branchée une unité de comparaison (25) avec au moins un seuil de commutation (S), réglé sensiblement à la valeur zéro, le signal de sortie de l'unité de comparaison (25) pouvant être intégré par-dessus au moyen des intégrateurs (31, 33).

2. Dispositif de mesure de distance selon la revendication 1,
**caractérisé en ce que** le seuil de commutation (S) de l'unité de comparaison (25) est situé à l'intérieur de la valeur RMS du bruit du signal de réception.

3. Dispositif de mesure de distance selon l'une des revendications restées dans,
**caractérisé en ce que** le seuil de commutation (S) est réglé sensiblement à la valeur zéro de telle façon que le bruit du signal de réception - aussi longtemps que le récepteur de lumière (21) n'est pas attaqué par l'impulsion de lumière émise - est réparti de la manière la plus régulière possible par rapport au seuil de commutation (S).

4. Dispositif de mesure de distance selon l'une des revendications précédentes,
**caractérisé en ce que** le seuil de commutation (S) correspond au décalage (offset) de l'unité de comparaison (25).

5. Dispositif de mesure de distance selon l'une des revendications précédentes,
**caractérisé en ce que** l'unité de comparaison (25) possède un seuil de commutation supérieur et un seuil de commutation inférieur, qui sont sensiblement réglés à la valeur zéro.

6. Dispositif de mesure de distance selon l'une des revendications précédentes,
**caractérisé en ce que** le signal de réception peut être comparé au seuil de commutation (S) au moyen de l'unité de comparaison (25), et **en ce qu'**un signal de sortie binaire est susceptible d'être généré en dépendance du résultat de la comparaison.

7. Dispositif de mesure de distance selon l'une des revendications précédentes,
**caractérisé en ce que** le dispositif de mesure de distance comprend un circuit de commande (39, 41, 43, 45) au moyen duquel une fenêtre temporelle ($t_{ref}$ à $t_{ref} + T_P$) peut être générée, qui possède une relation temporelle prédéterminée vis-à-vis de l'émission de l'impulsion de lumière émise et qui détermine le commencement et/ou la fin de la durée d'intégration dans le deuxième canal de réception (29).

8. Dispositif de mesure de distance selon l'une des revendications précédentes,
**caractérisé en ce que** le dispositif de mesure de distance comprend un récepteur de référence (39), unité de comparaison de référence (43) et un commutateur de fenêtre temporelle de référence (45), le récepteur de référence (39) étant couplé optiquement avec l'émetteur de lumière (11) afin, lors de l'émission de l'impulsion de lumière émise, de générer un signal de référence correspondant, et au moyen de l'unité de comparaison de référence (43) le signal de référence peut être comparé à au moins un seuil de commutation qui est réglé à une valeur supérieure à zéro, et le commutateur de fenêtre temporelle de référence (45) peut être piloté au moyen de l'unité de comparaison de référence (43) de telle façon qu'une fenêtre temporelle ($t_{ref}$ à $t_{ref} + T_P$) est générée pour la détermination de la durée d'intégration dans le deuxième canal de réception (29).

9. Dispositif de mesure de distance selon l'une des revendications précédentes,
**caractérisé en ce que** le dispositif de mesure de distance comprend un circuit d'évaluation (35) qui est connecté à la sortie de l'intégrateur (31) du premier canal de réception (27) et à la sortie de l'intégrateur (33) du deuxième canal de réception (29), de sorte qu'au moyen du circuit d'évaluation (35) une différence et/ou une relation des signaux de sortie des intégrateurs (31, 33) peut être déterminée.

10. Dispositif de mesure de distance selon l'une des revendications précédentes,
**caractérisé en ce que** le dispositif de mesure de distance comprend en outre un commutateur de fenêtre temporelle (47) du premier canal de réception (27), au moyen duquel peut être générée une fenêtre temporelle pour la détermination de la durée d'intégration dans le premier canal de réception (27).

11. Procédé pour déterminer une distance d'après le principe du temps de parcours de la lumière, dans lequel :

- au moins une impulsion de lumière émise est émise le long d'un trajet de mesure (17),
- l'impulsion de lumière émise est reçue après avoir traversé le trajet de mesure et un signal de réception correspondant est généré,
- dans un premier canal de réception (27) a lieu une intégration du signal pendant la durée de la totalité du signal de réception, et
- dans un deuxième canal de réception (29) a lieu une intégration du signal uniquement pendant une partie de la durée du signal de réception, qui dépend de la longueur du trajet de mesure (17),

**caractérisé en ce qu'**au moyen d'une unité de comparaison (25) le signal de réception est comparé à au moins un seuil de commutation (S), qui possède sensiblement la valeur zéro, et dans les deux canaux de réception (27, 29) le signal de sortie de l'unité de comparaison (25) est intégré par-dessus.

12. Procédé selon la revendication 11,
**caractérisé en ce que** l'impulsion de lumière émise est également amenée à un récepteur de référence (39) qui génère un signal de référence correspondant, ledit signal de référence étant comparé à au moins un seuil de commutation qui possède une valeur supérieure à zéro, et en dépendance du résultat de la comparaison, on génère une fenêtre temporelle pour déterminer la durée d'intégration dans le deuxième canal de réception (29).

FIG. 1

# FIG. 2

# FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9934235 A